(19) Europäisches Patentamt
European Patent Office
Office européen des brevets

(11) **EP 2 415 579 B1**

(12) **EUROPEAN PATENT SPECIFICATION**

(45) Date of publication and mention
of the grant of the patent:
**18.07.2018 Bulletin 2018/29**

(51) Int Cl.:
**B29C 43/02** *(2006.01)* **B29C 33/42** *(2006.01)*
**B29C 43/34** *(2006.01)* **B29C 43/36** *(2006.01)*
**B29C 59/02** *(2006.01)* **H01M 8/02** *(2016.01)*
**B29L 31/00** *(2006.01)* **B29L 31/34** *(2006.01)*

(21) Application number: **10761328.3**

(22) Date of filing: **16.03.2010**

(86) International application number:
**PCT/JP2010/001883**

(87) International publication number:
**WO 2010/116620 (14.10.2010 Gazette 2010/41)**

(54) **SHEET PRESS MOLDING METHOD AND METHOD OF PRODUCING FUEL CELL SEPARATOR**

BAHNENPRESSFORMVERFAHREN SOWIE VERFAHREN ZUR HERSTELLUNG EINES BRENNSTOFFZELLENSEPARATORS

PROCÉDÉ DE FORMATION PAR PRESSAGE DE FEUILLE ET PROCÉDÉ DE FABRICATION DE SÉPARATEUR POUR PILE À COMBUSTIBLE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 JP 2009082619**

(43) Date of publication of application:
**08.02.2012 Bulletin 2012/06**

(73) Proprietor: **SHOWA DENKO K.K.**
**Minato-ku, Tokyo 105-8518 (JP)**

(72) Inventors:
• **UTASHIRO, Tomoya**
**Tokyo 105-8518 (JP)**

• **ITO, Yoshinori**
**Tokyo 105-8518 (JP)**
• **NOGUCHI, Masayuki**
**Tokyo 105-8518 (JP)**

(74) Representative: **Strehl Schübel-Hopf & Partner**
**Maximilianstrasse 54**
**80538 München (DE)**

(56) References cited:
JP-A- 2002 373 670      JP-A- 2003 176 327
JP-A- 2003 176 327      JP-A- 2004 022 207
JP-A- 2004 022 207      JP-A- 2006 172 813
JP-A- 2006 252 815      US-A1- 2004 028 981
US-A1- 2004 041 294

EP 2 415 579 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a sheet press molding method. More particularly, the invention is related to a sheet press molding method using a sheet resin composition containing a high concentration filler.
Priority is claimed on Japanese Patent Application No. 2009-082619, filed March 30, 2009.

BACKGROUND ART

In recent years, as a molding method for thin products having a large area, a sheet press molding method has been focused on. This method has been used for molding fuel cell separators. Below, an example method for producing a fuel cell separator is used to describe a sheet press molding method.
Fuel cells generate electricity by the reverse reaction of electrolysis of water using hydrogen and oxygen. Since the only emission is water, the fuel cell is a clean power generator. Therefore, it has been noted in terms of environmental and energy issues. Fuel cells are classified into several types depending on the type of electrolyte used. As one of the fuel cells, solid polymer fuel cells which operate at low temperatures are most promising for automotives and consumers. The fuel cell has a single cell as a basic unit. This single cell, typically, includes a membrane electrode assembly (MEA: Membrane-Electrode Assembly) formed by integrating a solid polymer membrane as a solid polymer electrolyte and a pair of gas diffusion electrodes which carry catalysts and sandwich the polymer electrolyte membrane; and a separator which sandwiches MEA from outside and separates oxidizing gas and fuel gas. And, it is possible to achieve high output power in a fuel cell by laminating a number of unit cells.
On the surface contacting with the MEA, a fuel cell separator includes a gas flow path (groove), through which reaction gas is supplied to the gas diffusion electrode surface and the excess gas and gas produced is carried away. Using such a gas flow path, hydrogen fuel is supplied to one side of MEA in which one gas diffusion electrode is provided, and an oxidant gas such as air or oxygen is supplied to another side of MEA in which another gas diffusion electrode is provided. And then, a device having the above configuration can act as a fuel cell by connecting an external load circuit between two gas diffusion electrodes.
Thus, a separator is required which has high gas impermeability to make these gases be separated completely; has high electrical conductivity to low internal resistance; and thermal conductivity and strength are superior. In addition, as noted above, the fuel cell is formed by laminating a number of single cells. Therefore, the separator having light weight and thinner thickness is required.
To achieve these requirements, so far, the metal material and carbonaceous material as the material of the fuel cell separator, have been studied. The metallic material has excellent mechanical properties. Thus, the metal material has an advantage in that high electrical conductivity can be obtained with a thin separator. However, the metal material has a large specific gravity, and corrosion resistance is insufficient.
The carbonaceous material is an excellent lightweight material, and has high electrical conductivity, thermal conductivity, and strength. Molding technology of thin carbonaceous material and mass-production techniques has been studied.
For example, Patent Document 1 has disclosed a complex production method as follows. The fuel cell separator is obtained by carrying out CIP (Cold Isostatic Pressing) after adding binder to the carbonaceous powder, mixing and heating it; firing and graphitizing the product to obtain an isotropic graphite material; impregnating the isotropic graphite material into a thermosetting resin and hardening it; and then slicing the obtained solid polymer. In addition, Patent Document 2 discloses a method for producing a carbon sheet by impregnating a paper containing carbon powder or carbon fibers into thermosetting resin, laminating and bonding it, and then curing and firing it. In addition, Patent Document 3 discloses a method of producing a fuel cell separator by injection-molding a phenolic resin molding material using a die, and then firing the molded article obtained.
However, as disclosed in Patent Documents 1 to 3, as a material for the fuel cell separator, a material that has been fired was used. The fired material has high electrical conductivity and heat resistance. However, there is a problem in that brittle fracture easily occurs. In addition, there is a problem of poor productivity due to the long firing time. In addition, as described in Patent Document 1, in the process of producing a separator material, since cutting processing such as slicing is necessary, the productivity of process becomes lower and more costly. Therefore, it is difficult to use this material as a popular material in the future.
A technology to resolve this issue, for example, is a method for producing a fuel cell separator by using the sheet press molding, that is, press-molding a sheet material containing a carbonaceous material having electrical conductivity. Such a method is excellent in productivity, in particular, and is preferably used in producing a thin separator.
However, if the fuel cell separator is produced by molding a sheet material containing a carbonaceous material, there are large deviations in density of the resulting fuel cell separator. As a result, a large deviation in the electrical conductivity, mechanical strength and airtightness are observed.

As a technology to solve this problem, for example, Patent Document 4 discloses a method of producing fuel cell separator having a higher density in the surrounding area, by laminating a first sheet consisting of a flexible graphite sheet, and a second sheet consisting of a flexible graphite sheet in which the portion corresponding to the passage is removed; and press-molding the laminate to form the passage and the through hole. In addition, Patent Document 5 discloses a method for forming a fuel cell separator consisting of a molding article made of expanded graphite, by firstly forming the projection-recess pattern on the surface of the expanded graphite sheet, and then forming the projection-recess pattern on the molding article of expanded graphite by using a press-type having a pattern corresponding to the projection-recess pattern, in order to make the density deviation of expanded graphite less than 30%.

However, as a material of a fuel cell separator, in Patent Document 4 the flexible graphite sheet is used, and in Patent Document 5 the expanded graphite sheet is used. Since both the flexible graphite sheet and the expanded graphite sheet are porous, when the projection and recess pattern are formed on them, it is essentially inevitable that densities in different parts having different thickness are different. Therefore, it was required to further reduce the deviation in characteristics due to the deviation of density of the fuel cell separator. Furthermore, there is another disadvantage, for example, in that the surfaces of expanded graphite sheet and flexible graphite sheet are prone to yield defects such as swellings or cracks by press-molding.

As a technique to solve this problem, there is a method to realize the molded article by molding a sheet material containing a carbonaceous material and resin composition. For example, in Patent Document 6, it is disclosed that a fuel cell separator is obtained by curing the uncured sheets in a compression molding machine. This uncured sheet can be obtained by molding the electrically-conductive curable resin composition which contains carbon material and a resin composition containing the elastomer having 25 or more of Mooney viscosity ($ML_{1+4}$ (100°C)) at the mass ratio of (70 to 5) : (30 to 95). It is possible to reduce the deviation in the characteristics of the molded article obtained by press molding, and to make it difficult for defects to occur during press molding.

[Patent Document 1] Japanese Unexamined Patent Application, First Publication No. Hei 8-222241
[Patent Document 2]Japanese Unexamined Patent Application, First Publication No.60-161144
[Patent Document 3] Japanese Unexamined Patent Application, First Publication No. 2001-68128
[Patent Document 4] Japanese Unexamined Patent Application, First Publication No. 2000-21422
[Patent Document 5] Japanese Unexamined Patent Application, First Publication No. 2000-82475
[Patent Document 6] Japanese Unexamined Patent Application, First Publication No. 2003-176327

US 2004/028981 discloses the provision of a powdered molding material that is compression moulded in a second step. JP 2004 022207 A discloses a process for preparing a moulded product comprising making a recess in the powder to be compressed into the moulded product.

DISCLOSURE OF INVENTION

However, as the conventional sheet material containing a resin composition and filler such as a carbonaceous material, if the amount of filler is increased, the molding ability becomes poor when a molded article with a fine pattern is to be prepared. In addition, there is another defect in that the thickness deviation of this molded article becomes larger. This defect is not only limited to a carbonaceous material as filler, and other fillers such as silica and alumina fillers were similar.

In recent years, in order to improve power generation efficiency of fuel cells, a fuel cell separator tends to miniaturize gas flow patterns. However, as the fuel cell separator having a fine pattern of gas flow, when it is produced by molding a conventional sheet material containing a carbonaceous material and resin composition, as described above, not only sheet molding ability of the material becomes poor, but also there is another defect in that the thickness deviation of the separator becomes larger. In addition, since the fuel cell separators are stacked to produce a fuel cell having a large number of units to achieve high power output, even a slight deviation of the individual thickness of the separator may cause a very large deviation in thickness of the fuel cell.

Also, in a conventional sheet material containing a carbonaceous material and resin composition, in order to obtain a high electrical conductivity, it is necessary to contain large amounts of carbon material. However, as the blending amount of a carbonaceous material contained in the sheet material increases, the strength of the resulting molded article obtained by press-molding sheet material is reduced. Thus, even when using a conventional sheet material containing a carbonaceous material with a resin composition, a molded article can not be obtained with a sufficiently high strength and electrical conductivity as a fuel cell separator.

The objectives of the invention are achieved by the sheet press molding method according to the appended claim 1 to solve the above mentioned problems. Preferred embodiments are disclosed in the dependent claims. According to the invention, as the sheet material containing a filler and resin composition, even if that containing large amounts of filler is used, when the molded article was prepared by press-molding, a molded article having small thickness deviation can be obtained.

In an embodyment of the present invention a sheet pess molding method is provided, wherein the molded article is a fuel cell separator, in which the fuel cell separator can be produced highly productively and efficiently. According thereto, as the sheet material containing resin composition and carbonaceous material, even if that includes a large amount of carbonaceous material in order to obtain high electrical conductivity is used, a fuel cell separator produced by molding the sheet material, has a thin thickness and thickness deviation is small, and has a high strength and high electrical conductivity.

The sheet press molding method of the present invention includes forming a molded article by applying pressure to a sheet material using a pair of dies, at least one of which has a recess-projection pattern comprising a recess and a projection, wherein the method comprises: a sheet-forming process of forming a recessed portion, which has a volume corresponding to a total volume of the projections, in the surface of the sheet material, which includes a resin composite and 60-95% filler by volume; and a pressing process of forming a molded article to which the recess-projection pattern is transferred by placing the recessed portion in the sheet material facing the recess-projection pattern on the dies and then applying pressure to the dies. Therefore, it is possible to reduce the difference in the amount of compression deformation of sheet material during the pressing process carried out, between the portion to which the pressure is applied by the projections of the die and the portion facing the interval between the projections of the die. As a result, according to the invention, as the sheet material containing a filler and the resin composition, even if those containing large amounts of filler is used and the recess-projection pattern is a fine pattern, when the molded article was prepared by press-molding, molded article having small thickness deviation can be obtained.

In addition, the sheet press molding method, wherein the molded article is a fuel cell separator of the invention, includes forming a fuel cell separator by applying pressure to a sheet material using a pair of dies, at least one of which has a recess-projection pattern comprising a recess and a projection, wherein the method comprises: a sheet-forming process of forming a recessed portion, which has a volume corresponding to a total volume of the projections, in the surface of the sheet material, which includes a resin composite and 80-98% filler by mass; and a pressing process of forming a fuel cell separator to which the recess-projection pattern is transferred by placing the recessed portion in the sheet material facing the recess-projection pattern on the dies and then applying pressure to the dies. Therefore, it is possible to reduce the difference in the amount of compression deformation of a sheet material during the pressing process being carried out, between the portion to which the pressure is applied by the projections of the die and the portion facing the interval between the projections of the die. As a result, according to the invention, as the sheet material containing a filler and the resin composition, even if those containing large amounts of filler is used, when the molded article was prepared by press-molding, the fuel cell separator having small thickness deviation and having a high strength and high electrical conductivity can be obtained.

Moreover, since the method of producing a fuel cell separator includes the sheet-forming process and the sheet pressing process, not only can a fuel cell separator with a thin thickness be obtained, but also the method is more efficient than the methods including a cutting or a firing process.

BRIEF DESCRIPTION OF THE DRAWINGS

Fig. 1 is a diagram for explaining an example of a sheet press molding method using a conventional sheet material. Fig. 1(A) is a sectional view showing an example of a die used in the sheet press molding method. In addition, Figs. 1(B) to 1(D) are diagrams showing an example of the conventional sheet press molding methods of the past.
Figs. 2(A) to 2(C) are diagrams for explaining an example of the sheet press molding method of the present invention.
Fig. 3 is a plan view showing a fuel cell separator of Example 1.
FIG 4 is a graph showing the results of the evaluation of the thickness deviation fuel cell separator. FIG 4(A) is a graph showing the evaluation results of Example 1. FIG 4(B) is a graph showing the evaluation results of Example 2.
Fig. 5 is a graph showing the results of the evaluation of the thickness deviation fuel cell separator. Fig. 5 (A) is a graph showing the evaluation results of Comparative Example 1, Fig. 5(B) is a graph showing the evaluation results of Comparative Example 2.
Fig. 6 is a sectional view showing another example of a die used in the sheet press molding method of the invention.

DESCRIPTION OF EMBODIMENTS

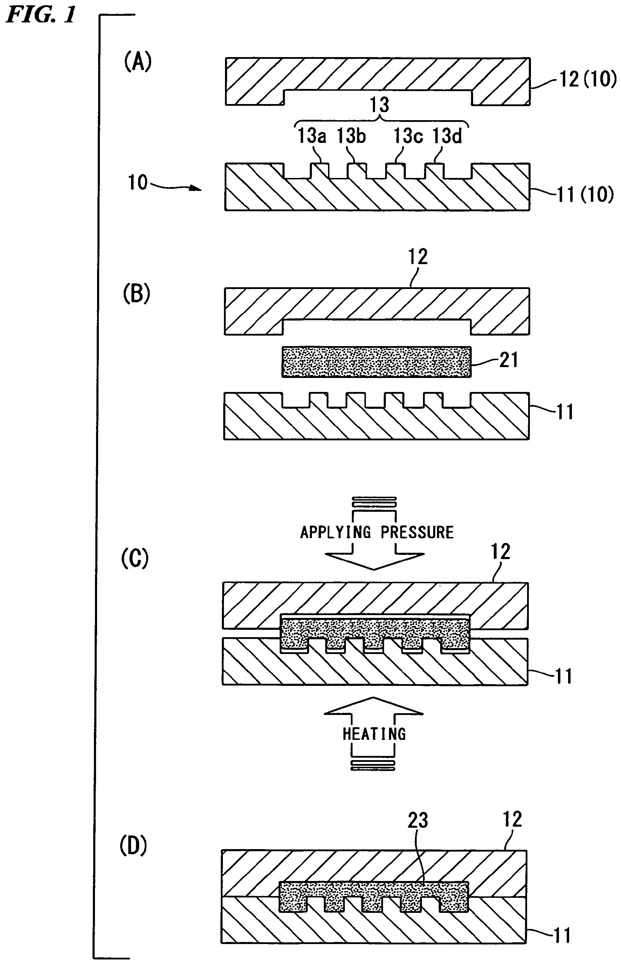

The sheet press molding method of the present invention will be described in detail with reference to the drawings.
Here, in order to simplify the description of the invention, a sheet press molding method which includes forming a molded article by sheet pressing a conventional sheet material containing resin composition and filler is described using the drawings. Fig. 1 is a diagram for explaining an example of a sheet press molding method using a conventional sheet material. Fig. 1 (A) is a sectional view showing an example of a die used in the sheet press molding method. In addition, Fig. 1 (B) to Fig. 1(D) are diagrams showing an example of a conventional sheet press molding method.

As shown in Fig. 1 (A), the die 10 is made of lower die 11 and upper die 12. The lower die 11 has a prescribed recess-projection pattern 13 including several projections 13a, 13b, 13c, and 13d (the example shown in Fig. 1(A) has four projections).

As a method of forming a molded article using the die 10 shown in Fig. 1 (A), firstly, as shown in Fig. 1(B), a sheet material 21 containing filler and resin composition was placed between the lower die 11 and upper die 12. Next, as shown in Fig. 1 (C), the temperature of lower die 11, upper die 12 and a sheet material 21 were set to the temperature at which the sheet material 21 can be softened and become deformable. And then the sheet pressing process was performed by keeping the prescribed time after compressing the sheet material 21 by applying pressure to the lower die 11 and the upper die 12. As a result, as shown in Fig. 1 (D), the sheet material 21 is molded and article 23, to which the recess-projection pattern 13 was transferred, was obtained.

Here, the inventor of the present invention prepared various samples of sheet materials 21 in which only filler contents are changed, and molded each sheet material 21 under the same conditions using the same die 10, to investigate the relationship between the filler contents of sheet material 21 and the thickness deviation of molded article 23.

As a result, it was observed that the molded article 23 having a substantially uniform thickness was obtained when the sheet material 21 containing less filler and a large amount of resin composition was press-molded, however, the thickness deviation of the molded article 23 was larger when sheet material 21 containing more filler was press-molded.

The inventors of the present invention investigated what caused this result, as shown below. That is, in the case of sheet material 21 containing a large amount of resin composition, the softened sheet material has good fluidity during the pressing process. Thus, the excess softened sheet material during the pressing process is pushed out in the direction of the periphery (x-y (plane)) smoothly. As a result, it is estimated that obtained molded article 21 has a substantially uniform thickness.

On the other hand, the sheet material 21 containing a lot of filler did not flow even if during the pressing process. Thus, the softened sheet material could not be pushed out during the pressing process in the direction of the periphery (x-y (plane)), and then remained there to make the compression and deformation mainly in the direction of thickness (z). As a result, it is estimated that the deviation of the thickness of the molded article 23 becomes larger.

Also, the inventors of the present invention investigated the distribution of the thickness of the molded article 23. As a result, when the sheet material 21 has high-filler content, the thickness becomes thick in the center of the molded article 23 and the thickness becomes thinner at the periphery of the molded article 23. Furthermore, this tendency of the distribution of the thickness is more remarkable when a molded article 23 contains more filler or when finer recess-projection pattern 13 is transferred in the molded article 23.

It is estimated that the trend in the distribution of the thickness of the molded article 23 is due to the following reasons. That is, in the center of the molded article 23, softened sheet material flows hardly during the pressing process so that the thickness becomes thicker. In the periphery of the molded article 23, softened sheet material flows easily so that the thickness becomes thinner.

Furthermore, the inventors of the present invention repeated intensive studies based on the findings above, and then arrived at this invention. That is, the invention includes the steps of forming a recessed portion, in the surface of the sheet material, having a volume which corresponds to a total volume of the projections, before the pressing process using a die including a recess-projection pattern. As a result, it is possible to reduce the difference of the amount of compression deformation of the sheet material during the pressing process, between the portion to which the pressure is applied by the projections of the die and the portion facing the interval between the projections of the die. In addition, even if sheet material containing large amounts of filler has a poor fluidity during pressing process, the molded article produced by the method of the present invention has small thickness deviation.

More specifically, in comparison with the sheet material without such a recessed portion, when the sheet material having such a recessed portion was press-molded by placing the recessed portion in the sheet material facing the recess-projection pattern on the dies, since the excess amount of the softened sheet material which is generated in the portion to which pressure is applied by the projection of die is reduced, and compression deformation in the portion to which pressure is applied by the projection of die becomes smaller, the difference in the amount of compression deformation of sheet material during the pressing process is reduced.

Also, when a sheet material having such a recessed portion is press-molded using the recess-projection pattern, sheet material becomes insufficient in the section facing the interval portion between projections of die. Therefore, the excess amount of softened sheet material, which is generated by applying pressure to projections of a die, is pushed out smoothly into the section facing the interval portion between projections of the die. As a result, fluidity of the softened sheet material during molding is improved.

Moreover, since the volume of the recessed portion corresponds to a total volume of the projections of the die, the amount of excess softened sheet material during the pressing process approximates to the insufficient amount of the softened sheet material in the portion between the projections. As a result, it is possible not only that a very small amount of compressive deformation is obtained in the portion to which pressure is applied by the projections of the die, but also that the softened sheet material moves efficiently.

Here, as another method for decreasing the difference of the compressive deformation between a portion to which pressure is applied by the projections of die and another portion facing the interval between the projections of die, a thinner sheet material having a uniform thickness may be used so that the volume of the difference between the thinner one and the original one corresponds to the total volume of projections of die. When using the thinner sheet material having the uniform thickness, compared with the use of sheet material having a uniform thickness which is the same thickness as the height of the interior space of the die, thickness deviation of the molded article can be reduced. However, when using the thinner sheet material having a uniform thickness, the decrease of the thickness deviation of the molded article is not sufficient because the amount of sheet material which is used in the portion facing the recess-projection pattern is different from the amount of sheet material which is used in the other portion.

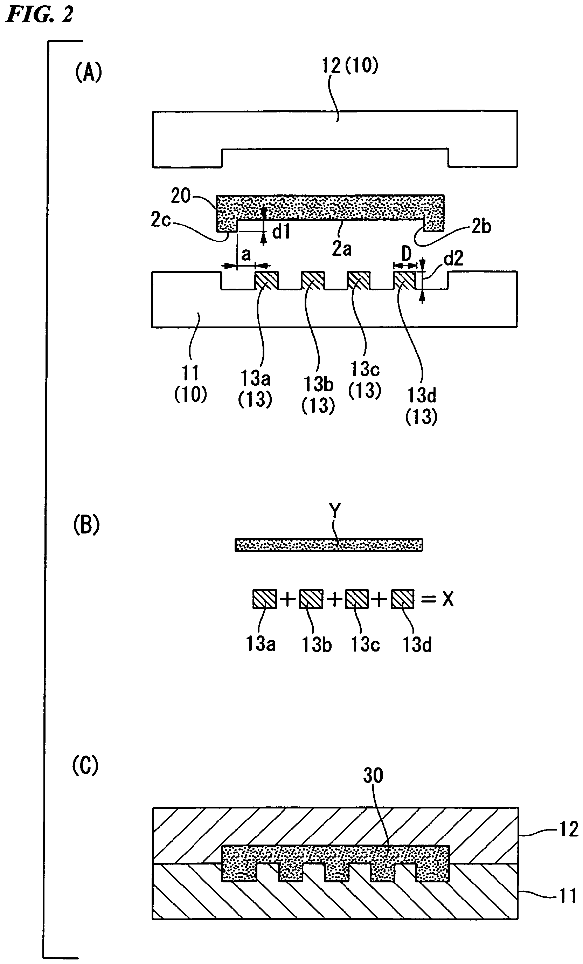

Here, the method of producing a fuel cell separator by using a sheet press molding method of the present invention will be described with reference to the drawings. Fig. 2(A) to 2(C) shows a process diagram for explaining an example of a sheet press molding method of the present invention.

The sheet press molding method of the present invention includes forming a molded article 30 by applying pressure to a sheet material 20 using a pair of dies 10 having an upper die 12 and a lower die 11 which has a prescribed recess-projection pattern 13.

The sheet press molding method of the present invention includes a sheet-forming process of forming a recessed portion 2a in the surface of the sheet material 20; and as shown in Fig. 2(A), a pressing process of forming a molded article 30 to which the recess-projection pattern is transferred by placing the recessed portion 2a in the sheet material 20 facing the recess-projection pattern 13 on the lower die 11 of the die 10 and then applying pressure to the die 10. As a result, shown in Fig. 2 (C), recess-projection pattern 13 is transferred into molded article 30.

The sheet material 20 contains 60% to 95% filler by volume and the resin composition. The filler may be appropriately determined depending on applications of molded article 30. For example, not limited to that, an inorganic particle such as silica, alumina, titanium oxide; an organic particles such as polyethylene, polystyrene; fibrous; and carbonaceous material can be used. Furthermore, when the sheet press molding method of the present invention is used for the production of a fuel cell separator as a molded article 30, a carbonaceous material may be preferably used as filler.

As the resin composition constituting the sheet material 20, a thermoplastic resin and thermosetting resin can be used.

The content of the filler contained in the sheet material 20 is 60-95% by volume. Although the specific gravity of filler depends on the type of the used filler, when the carbonaceous material is used as filler, the filler content of 60-95% by volume corresponds to the content of 80% to 98 % by weight. Additionally, when carbonaceous material, which is used in the production of a fuel cell separator as a molded article30, is used as filler, the content of the filler is more preferably 85% to 98 % by weight.

Even if the content of filler is less than the above range, it is also possible to use the sheet press molding method of the present invention. However, using a small amount of filler reduces the effect of the present invention. In addition, in the case of producing fuel cell separator as the molded article using a carbonaceous material which is used as a filler, when the filler content is less than the above range, insufficiently electrically-conductive molded article 30 may be obtained. Also, when the filler content exceeds the above range, since fluidity of the softened sheet material is reduced during the pressing process, molded article 30 having sufficiently small thickness deviation can not be obtained.

Also, as a sheet forming processes in which recessed portion 2a is formed on the surface of the sheet material 20, the sheet forming processes may be a process of laminating a first sheet and a second sheet, wherein the first sheet is formed by eliminating the recessed portion 2a through the first sheet, which contains the resin composition and 60% to 95% filler by volume (when using a carbonaceous material as a filler, 80% to 98% by weight),; and the second sheet having a uniform thickness contains the same material as that of the first sheet. When using such a method, it is easy to form the sheet material 20 having a recessed portion 2a, accurately. The first sheet and second sheet may be laminated together with contact, or to the state overlapping each other without contact.

In addition, the recessed portion 2a may be formed by preparing a sheet material which has uniform thickness and contains 60% to 95% filler by volume and a resin composition, and then cutting and removing the prescribed area of the sheet material. In addition, the removal by cutting process for forming a recessed portion 2a can be performed more easily and efficiently than the other process, for example, forming a fine recess (groove) of the flow passage of fuel cell separator.

In addition, a sheet having uniform thickness and containing 60% to 95% filler by volume and a resin composition, which is used in forming the sheet material 20, for example, can be formed by mixing the components of the sheet material containing filler and a resin composition uniformly with a mixer, which is commonly used in the field, such a roll mill, extruder, kneader, and Banbury mixer; and then molding the mixture by a mill roll. In addition, the components of the sheet material containing filler and a resin composition can be milled or granulated in order to facilitate the supply of the components to the molding machine after mixing. As a milling method, homogenizer, Wiley pulverizer, high speed rotary pulverizer (hammer mill, pin mill, cage mill, blender) and the like can be used. Moreover, it is preferable to mill while cool to prevent aggregation among the materials. As the granulation method, the method of making pellet by using extrusion machine, extruder, and co-kneader; or the method using use a pan type granulator or the like can be used.

As the die 10 shown in Fig. 2 (A), the same die as the die 10 shown in Fig. 1 (A) can be used. The recess-projection pattern 13 in the lower die 11 may be determined according to the use of molded article 30. In this embodiment, but are not limited to, a recess-projection pattern 13 has plural projections 13a, 13b, 13c, 13d each of which shows a rectangle pattern and is placed with equal spacing to each other in cross-sectional view and show a pattern of multiple stripes in a plan view. In this embodiment, projection portions 13a, 13b, 13c, 13d have the same shape in cross-sectional view; however, the projection portions may have different widths and heights in cross-sectional view, and may have different shapes. In the case of producing a fuel cell separator as a molded article 30, recess-projection pattern 13 corresponds to the recess (groove) pattern of the flow passage of fuel cell separator.

In this embodiment, as shown in Fig. 2 (A), the height d2 of projection portions 13a, 13b, 13c, 13d is longer than the depth d1 of the recessed portion 2a formed on the surface of the sheet material 20. That is, as shown in Fig. 2 (A), in sheet material 20, the recessed portion 2a having a shorter depth d1 than the height d2 of projection portions 13a, 13b, 13c, 13d is formed. Therefore, in the pressing process, the bottom of the recessed portion 2a can be applied pressure by using the all projection portions 13a, 13b, 13c, and 13d.

In addition, sheet material 20, as shown in Fig. 2 (A), includes a recessed portion 2a and a frame portion 2c arranged around the recessed portion 2a. The thickness of the frame portion 2c is thicker than the recessed portion 2a.

Here, Fig. 2 (A) and Fig. 2(B) are used to describe the volume of the recessed portion 2a of the sheet material 20. In this embodiment, the volume of the recessed portion 2a of the sheet material 20 means the volume of the internal space surrounded by recessed portion 2a and a virtual surface along the surface of the sheet material 20. The volume Y of recessed portion 2a of the sheet material 20 shown in Fig. 2 (B) is determined to correspond to a total volume X of the projection portions 13a, 13b, 13c and 13d in the lower die 11 of die 10 as shown in Fig. 2 (A). When the volume Y of recessed portion 2a corresponds to a total volume X of the projection portions 13a, 13b, 13c and 13d in the lower die 11 of die 10, in the pressing process, since the excess amount of the softened sheet material 20 generated by applying pressure to the sheet material by using projection portions 13a 13b, 13c and 13d in the lower die 11 of the die 10, approximates with the insufficient amount of the softened sheet material 20 generated in the interval portion between the projection portions 13a, 13b, 13c and 13d, it is possible to move the softened sheet material very smoothly and efficiently.

The volume Y of the recessed portion 2a is preferably obtained by calculating from the total volume X of projections in the lower die 11 after taking the difference between densities of molded article 30 and sheet material 20 into consideration. Specifically, when the density of the sheet material 20 is $\rho_1$, density of the molded article 30 (density of the fuel cell separator when fuel cell separator is produced as a molded article 30) is $\rho_2$, and the total volume of the projections 13a, 13b, 13c and 13d in the lower die 11 is X, the volume Y of the recessed portion 2a, as shown by the following formula, is within a range of $\pm$ 5% of $\{X(\rho_2/\rho_1)\}$ preferably, more preferably within the range of $\pm$ 2%.

$$1.05X\ (\rho_2/\rho_1) \geq Y \geq 0.95X\ (\rho_2/\rho_1)$$

In other words, the density $\rho_1$ of the sheet material 20 is different from the density $\rho2$ of molded article 30 because it may change during the pressing process. However, if it meets the above equation, the volume Y of the recessed portion 2a is within the range of $\pm$ 5% of the value of $\{X(\rho_2/\rho_1)\}$ which is obtained by eliminating the differences between the volume Y of recessed portion 2a and the total volume X of the projections in lower die 11 due to the difference between the densities of sheet material 20 and molded article 30. So, if the above formula is satisfied, the amount of softened sheet material 20 "has no difference from" or "is very approximate to" the amount of the insufficient softened sheet material 20 in the portion facing the interval portion between projections 13a, 13b, 13c and 13d. As a result, in particular, it is possible to move the softened sheet material very smoothly and efficiently.

In addition, when the density of the sheet material 20 is $\rho_1$, density of the molded article 30 (density of the fuel cell separator when fuel cell separator is produced as a molded article 30) is $\rho_2$, and the total volume of the projections 13a, 13b, 13c and 13d in lower die 11 is X, the volume of the recessed portion 2a of the sheet material 20 is Y, the volume Y of the recessed portion 2a satisfies the following equation:

$$Y\ /\ X = \rho_2/\rho_1\ .$$

When the above formula ($Y / X = \rho_2/\rho_1$) is satisfied, the mass of the sheet material 20 corresponding to the volume Y of recessed portion 2a is equal to the mass of volume of molded article 30 which is equivalent with the total volume X of projections 13a, 13b, 13c and 13d. Thus, regardless of the difference between densities of molded article 30 and sheet material 20, the amount of excess softened sheet material 20 generated by applying pressure to sheet material 20 by using the projections 13a, 13b, 13c and 13d in lower die 11, is the same as the amount of the insufficient softened sheet material 20 in the portion facing the interval portion between projections 13a, 13b, 13c and 13d. As a result, it is possible to move the softened sheet material very smoothly and efficiently.

In addition, the plan view area of the recessed portion 2a is preferably larger than area enclosed by the edges of projections 13a and 13d placed as outermost projections among the plurality of projections 13a, 13b, 13c and 13d. In this case, as shown in Fig. 2 (A), in the pressing process, the recessed portion 2a of sheet material 20 is preferable placed to face recess-projection pattern 13 of die 10 by placing the edge 2b of the recessed portion 2a, in cross-sectional view, outer than the projections 13a and 13d placed as outermost projections.

In the pressing process, each of the projections 13a, 13b, 13c and 13d pushes the excess softened sheet material in the bottom of the recessed portion 2a of sheet material 20 outside around equally, wherein the recessed portion 2a is placed to face projections. If the interval a, as shown in Fig. 2(A), between the edge 2b of recessed portion 2a and the projections 13a and 13d placed as the outermost projections, is not provided, the fluidity of the excess softened sheet material, which would be pushed by the projections 13a and 13d placed on the most outside, is inhibited by the softened sheet material of the frame part 2c of the sheet material 20.

In contrast, when the plan view area of the recessed portion 2a is larger than area enclosed by the edges of projections 13a and 13d placed on the most outside, and in the pressing process, the recessed portion 2a of the sheet material 20 is placed to face recess-projection pattern of die 10 by placing the edge 2b of the recessed portion 2a, in cross-sectional view, outer than the projections 13a and 13d placed on the most outside, the fluidity of the excess softened sheet material, which would be pushed by the projections 13a and 13d placed on the most outside, can be improved. As a result, the deviation of thickness of the molded article 30 can become smaller.

In addition, when D is the width of the outermost projections 13a and 13d, the interval between the edge 2b of the recessed portion 2a and the outermost projections 13a and 13d is preferably within the range of D/2 to D. Also, the interval a between the edge 2b of the recessed portion 2a and the outermost projections 13a and 13d may be uniform along the length of the projections 13a and 13d or not. In addition, it is preferable that the interval between the edge 2b of the recessed portion 2a and the outermost projection 13a be the same as the interval between the edge 2b of the recessed portion 2a and the outermost projection 13d, in order to further reduce the thickness deviation of the molded article 30, as described in this embodiment, however, the two intervals may be different.

If the interval a between the edge 2b of the recessed portion 2a and the outermost projections 13a and 13d is less than the above range, immediately after the pressing process begins, the interval a is filled with the excess soften sheet material pushed by the outermost projections 13a and 13d, therefore, the fluidity of the excess soften sheet material which would be pushed by the outermost projections 13a and 13d become insufficient. As a result, the thickness of the portion of the molded article 30, which faces the outermost projections 13a and 13d, tends to be thicker than the other portion. In addition, if the interval a is more than the above range, the fluidity of the excess soften sheet material which would be pushed by the outermost projections 13a and 13d is better than the other portion. As a result, the thickness of the portion of the molded article 30, which faces the outermost projections 13a and 13d, is thinner than the other portion.

In addition, it is preferable that the depth d1 of the recessed portion 2a be Y/S, when the volume of the recessed portion 2a is Y and the plan view area of a recessed portion 2a is S. By setting such a recessed portion 2a, the fluidity of the sheet material in the pressing process can be further uniform. As a result, it is possible to further reduce the thickness deviation.

Moreover, when producing a fuel cell separator as a molded article 30, it is preferable that a fuel cell separator produced as a molded article 30 by the method of the present invention has a thickness of 2 mm or less. If the fuel cell separator has the thickness of 2 mm or less, the thickness is thin enough.

Here, the sheet material 20 used in producing a fuel cell separator as a molded article 30 is explained. The sheet material 20 used in producing a fuel cell separator as the molded article 30 contains carbonaceous material as a filler (A) and resin composition (B), as essential components.

"Carbonaceous material (A)"

As carbonaceous material (A), one or a mixture of more than two kinds of carbonaceous materials selected from carbon black, carbon fibers (pitch type or PAN type), amorphous carbon, expanded graphite, kish graphite, artificial graphite, natural graphite, vapor grown carbon fiber, carbon nanotubes and fullerenes, can be used. Since the electrical conductivity and filling ability of carbon black is lower than the others, it is preferable that as the carbonaceous material (A), one or a mixture of more than two kinds of carbonaceous materials selected from carbon fibers (pitch type or PAN type), amorphous carbon, expanded graphite, kish graphite, artificial graphite, natural graphite, vapor grown carbon fiber, carbon nanotubes and fullerenes is used.

In addition, it is preferable that carbonaceous material containing boron be used, and among such carbonaceous materials, it is more preferable that artificial graphite containing boron be used.

(Carbon black)

As an example of carbonaceous material (A), carbon black may be Ketchen black or acetylene black obtained by incomplete combustion of natural gas and thermal decomposition of acetylene; furnace carbon obtained by incomplete combustion of hydrocarbon oil and natural gas; and thermal carbon obtained by thermal pyrolysis of natural gas.

(Carbon fibers (pitch-type, PAN-type))

As an example of carbonaceous material (A), a carbon fiber may be pitch type made from the heavy oil, oil byproducts, and coal tar; or PAN type made from polyacrylonitrile.

Average fiber length of carbon fiber is obtained by using the number average of fiber length of 100 fibers in which fiber length is determined by image analysis after SEM (manufactured by JEOL, JSM-5510) measurement. In addition, the carbon fiber here refers to that having ratio of (long axis length/ short axis length) 10 or more.

(Amorphous carbon).

As an example of carbonaceous material (A), amorphous carbon may be obtained by the method of curing phenolic resin, firing it and then pulverizing it to powder, or the method curing phenolic resin to a spherical or a powder state, and then firing it. In order to obtain amorphous carbon with high electrical conductivity, it is preferable to perform heat treatment of more than 2000°C.

(Expanded graphite)

As an example of carbonaceous material (A), expanded graphite, may be a powder obtained by expanding graphite crystal in the C axis direction of, or a powder obtained by pulverizing a rolled sheet of the above expanded graphite powder. The expanding process includes dipping the graphite in which crystal structure is highly developed, into a strong oxidizing solution such as a mixture of nitric acid and concentrated sulfuric acid, or a mixture of concentrated sulfuric acid and hydrogen peroxide to yield graphite intercalation compound; and then heating it rapidly after washing with water, wherein the graphite in which crystal structure is highly developed may be natural graphite or pyrolytic graphite.

(Kish graphite)

As an example of carbonaceous material (A), a kish graphite may be a plane crystallized carbon which is precipitated from the molten pig iron when the temperature decreases in molten iron pretreatment. Since this kish graphite is generated as a mixture of slag powder and iron oxide, it is preferable to use a powder which is obtained by adjusting the size suitable to use after pulverizing the pure kish graphite recovered from dressing process.

(Artificial graphite)

As an example of carbonaceous material (A), artificial graphite, for example, obtained by the method described below, may be used. Generally, in order to obtain artificial graphite, coke is produced. As a raw material of coke, petroleum type pitch and coal type pitch is used. These raw materials are carbonized to coke. A graphite powder may be obtained from coke, in general, by graphitization treatment after pulverizing coke, by pulverizing graphite after graphitization treatment of coke, or by pulverizing graphite after graphitization treatment of fired product of molded article made of binder and the coke ("coke and the like" means coke and this fired product). It is preferable that the temperature of heating process be below 2000°C, and more preferably below 1200 °C because it is better that crystal of coke and the like have not been developed. In addition, as a method of graphitization treatment, a method using a Acheson furnace and applying electric current directly by placing the powder into a graphite crucible, or a method heating the powder by a graphite heating element, can be used.

(Vapor grown carbon fiber, carbon nanotubes)

Carbonaceous material (A) preferably contains 0.1 to 50% by mass carbon nanotubes and / or vapor grown carbon fiber. More preferably 0.1 to 45% by mass, most preferably is 0.2 to 40 % by mass.

(Vapor grown carbon fiber)

As vapor grown carbon fiber, carbon fiber having 0.5 to 10 $\mu$m length and less than 200 nm diameter can be used. The carbon fiber may be obtained by pyrolysis reaction at 800 to 1300°C with hydrogen, for example, using an organic compound such as benzene, toluene, natural gas and a hydrocarbon gas, as a raw material, in the presence of transition metal catalysts such as ferrocene. The preferred size of the fiber diameter is less than 160 nm, more preferably less than 120 nm. It is not preferable to use fiber with diameter greater than 200 nm because the decreasing effect of obtaining high electrical conductivity. In addition, as the carbon fiber obtained by the method described above, it is preferable that the graphitization treatment be at about 2300 to 3200 °C. Furthermore, the treatment of graphite is more preferably carried out in an inert gas atmosphere in the presence of a graphitization catalyst such as boron, boron carbide, beryllium, aluminum, or silicon.

(Carbon nanotubes)

In recent years, carbon nanotubes are focused on not only the mechanical strength, field emission capability and hydrogen absorption features, but also magnetic function in terms of industrial application. This type of carbon nanotube is also called graphite whiskers, filamentous carbon, graphite fiber, extra fine carbon tube, carbon tube, carbon fibril, carbon microtube, carbon nanofibers. And the fiber diameter is about 0.5 to 100 nm. Carbon nanotubes include monolayer carbon nanotubes in which there is one layer of graphite film to form the tube, and a multilayer carbon nanotube in which there are multilayer of graphite film to form the tube. In the present invention, it is possible to use any one of monolayer and multilayer carbon nanotube. It is preferable that monolayer carbon nanotubes be used because the composition having higher electrical conductivity and mechanical strength may be obtained.
Carbon nanotubes, for example, can be produced by arc discharge method, laser vaporization method and thermal decomposition method in Bando and Saito: "Fundamentals of Carbon Nanotubes" (pages 23-57, published by Corona, in 1998). In addition, in order to increase the purity, purifying method such as hydrothermal method, centrifugation, ultrafiltration, and oxidation, can be further used. The temperature treatment at about 2300 to 3200°C under an atmosphere of inert gas to remove the impurities is preferable. Thermal treatment at about 2300 to 3200°C under an atmosphere of inert gas, in the presence of a graphitization catalyst such as boron, boron carbide, beryllium, aluminum and silicon, is more preferable.

(Boron-containing carbonaceous material)

Carbonaceous material (A) preferably contains boron at 0.05 to 5 % by mass, more preferably 0.06 to 4% by mass, most preferably 0.06 to 3%. When content of boron is less than 0.05% by mass, it tends to be difficult to obtain highly electrically-conductive carbonaceous material of interest. Moreover, when content of boron is more than 5% by mass, it tends to be difficult to improve the electrical conductivity of the carbonaceous material, and in addition, the other properties become worse because amount of impurities increase.
The measurement method of the amount of boron contained in the carbonaceous material is not particularly limited. For example, plasma-induced emission spectroscopy (hereinafter, "ICP" and abbreviated), and mass spectrometry-induced plasma atomic emission spectrometry (hereinafter, "ICP-MS" and abbreviated) can be used. Specifically, for example, the method to measuring boron may includes: adding sulfuric acid and nitric acid into the boron-containing carbonaceous material sample, heating the sample to 230°C and decompose using microwave (digester method), diluting the sample with water after decomposing by adding perchloric acid ($HClO_4$), and then measuring the amount of boron using an ICP emission analyzer.
As a method to add boron into carbonaceous material (A), for example, mixing one or a mixture of two or more kinds of carbonaceous selected from carbon black, carbon fibers, amorphous carbon, expanded graphite, kish graphite, artificial graphite, natural graphite, vapor grown carbon fiber, carbon nanotubes and fullerenes, with a source of boron such as B, $B_4C$, BN, $B_2O_3$ and $H_3BO_3$, and then performing graphitization treatment at about 2300 to 3200°C. If the mixture of carbonaceous material and the boron source is not uniform, not only can uniform boron-containing carbonaceous material not be obtained, but also the possibility of sintering becomes higher during the graphitization treatment. In order to mix the carbonaceous material uniformly with the boron source, it is preferable to pulverizing the boron sources to a powder having a particle size of less than 50 $\mu$m, more preferable less than 20 $\mu$m, before mixing the carbonaceous powder with the boron sources.
As the form of boron in the boron-containing carbonaceous material, it is enough if boron compound and/or boron are mixed into the carbonaceous material. This not particularly limited, if carbonaceous material contains graphite crystal, it is preferable that boron compound and / or boron exist between the layers of graphite crystal, or the boron atom substitute carbon atoms that form part of the graphite crystal. In addition, if some carbon atoms are replaced by the boron atoms, a bond type between a boron atom and a carbon atom may be any type of bond, for examle, a covalent bond or ionic bond.

(Pulverizing coke)

In pulverizing coke used in the production of carbonaceous materials, and pulverizing artificial graphite and natural graphite used as a carbonaceous material, for example, high-speed rotary pulverizer (hammer mill, pin mill, cage mill) and various ball mill (rolling mill, vibration mill , planetary mill), stirring mill (bead mill, attritor, flow tube mill, annular mill), can be used. In addition, the fine mill, such as a screen mill, turbo mill, super micron mill and jet mill etc., can be used by selecting the conditions. It is preferable to control average particle size and particle size distribution of the powder of coke and natural graphite by selecting the condition of pulverizing process when coke and natural graphite is pulverized using above pulverizers and if necessary, classifying the powder.

(Classification of coke, etc.)

As a method of classifying coke powder, natural graphite powder and artificial graphite powder, for example, sieve-method or air classifiers such as forced vortex-die centrifugal classifier (micron separator, turbo-plex, turbo classifier, super separator) and inertial classifier (a modified virtual-impactor, elbow jet) may be used. In addition, a wet separation such as precipitation separation method and centrifugal classification method can also be used.

"Resin composition (B)"

Resin composition (B) includes, for example, thermoplastic resins and thermosetting resins.
From the viewpoint of the durability of the fuel cell separator, it is preferable to use a resin which can lead the melting point or glass transition temperature of the fuel cell separator to above 120°C.
Moreover, in order to improve the hydrothermal resistance of the fuel cell separator, in a sheet material of the electrically-conductive resin composition containing carbonaceous material (A) and resin composition (B), as resin composition (B), it is preferable to contain at least one or more compounds selected from 1, 2 - polybutadiene, 3,4-polyisoprene, novolac epoxy resins, novolak-type phenolic resin, polyethylene, polypropylene, poly(methyl pentene), polystyrene, polyphenylene sulfide, poly-cycloolefin, polybutene-1, poly(phenylene ether), poly(ether-etherketone), fluorine resin, and liquid crystal polymer, at 2 to 20% by weight. In particular, it is more preferable to use at least one or more compounds selected from 1,2-polybutadiene, 3,4-polyisoprene, polyethylene, polypropylene and polybutene-1, at 2 to 20% by weight.

(Other additives)

The sheet material 20 in the case that the molded article 30 is a fuel cell separator contains carbonaceous material as a filler (A), a resin composition (B). In addition, if necessary, monomer, reaction initiator, elastomers, rubber, resin modifiers may be further contained. In addition, the sheet material 20 in the case that molded article 30 is fuel cell separator, in order to improve the hardness, strength, electrical conductivity, moldability, durability, weather resistance, and water resistance, an additive such as glass fibers, whiskers, metal oxides, organic fibers, UV stabilizers, antioxidants, die release agents, lubricants, water repellent agents, thickeners, low shrinkage agents, agents imparting hydrophilicity can be contained if necessary.
The sheet press molding method of this embodiment includes a step of forming a molded article 30 by applying pressure to a sheet material using a pair of dies, at least one of which has a prescribed recess-projection pattern 13 including recesses and projections 13a, 13b, 13c and 13d, wherein the method comprises: a sheet-forming process of forming a recessed portion 2a, in the surface of the sheet material 20, having a shorter depth d1 than height d2 of the projections 13a, 13b, 13c and 13d of the recess-projection pattern 13 and a volume Y which corresponds to a total volume X of the projections 13a, 13b, 13c and 13d, wherein the sheet material 20 containing resin composite and 60-95% filler by volume; and a pressing process of forming a molded article 30 to which the recess-projection pattern 13 is transferred by placing the recessed portion 2a in the sheet material 20 facing the recess-projection pattern 13 on the dies 10 and then applying pressure to the dies 10. According to the sheet press molding method of this embodiment, it is possible to reduce the difference in the amount of compression deformation of sheet material 20 during the pressing process, between the portion to which the pressure is applied by the projections 13 a, 13b, 13c and 13d of the die 10 and the portion facing the interval portion between the projections 13 a, 13b, 13c and 13d of the die 10.
As a result, according to the sheet press molding method of the present embodiment, even if sheet material 20 containing resin composition and large amounts of filler, and the recess-projection pattern 13 is a fine pattern, when the molded article 30 was prepared by press-molding, the molded article 30 having less thickness deviation can be obtained.

The method of producing a fuel cell separator of the present embodiment is the method of producing a fuel cell separator as molded article 30 by using a sheet press molding method of this embodiment using sheet material 20 containing carbonaceous material as filler. According to the embodiment, when the sheet material 20 containing resin composition and a large amount of carbonaceous material as filler is used for press-molding, the fuel cell separator having small thickness deviation and having a high strength and high electrical conductivity can be obtained.

In the method for producing a fuel cell separator of this embodiment, when a recess-projection pattern 13 having a fine pattern was used to the press-molding, the fuel cell separator having small thickness deviation and having a fine recess (groove) as a flow passage can be obtained easily.

In the method for producing a fuel cell separator of this embodiment, a thin fuel cell separator can be efficiently produced by the method includes a sheet-forming process and pressing process.

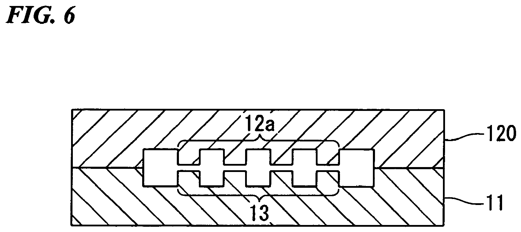

In addition, as a pair of the dies used in the invention, the recess-projection pattern 13 is formed only on the lower die 11 of a pair of upper and lower dies 10 as described above, however, a prescribed recess-projection pattern 13 including a recess and projection may be formed on at least one of the pair of the dies. For example, as shown in Fig. 6, recess-projection patterns 13 and 12a may be formed on both of a pair of the upper and lower dies 11 and 120. Fig. 6 is a sectional view showing another example of dies used in the sheet press molding method of the invention. In a pair of dies 11, 120 shown in Fig. 6, the recess-projection pattern 13 formed on one dies 11 is the same as the recess-projection pattern 12a formed on another die 120.

In addition, when recess-projection patterns are formed on both of a pair of dies, as the pair of dies 11, 120 shown in Fig. 6, the recess-projection pattern 13 formed on one dies 11 may be the same as the recess-projection pattern 12a formed on another dies 120, however, the two patterns may be different. When a first recess-projection pattern formed on one dies is different from a second recess-projection pattern formed on another dies, the volume and shape of the recessed portion having a volume which corresponds to the total volume of projections of the first recess-projection pattern and the recessed portion having a volume which corresponds to the total volume of projections of the second recess-projection pattern are determined separately according to the first and second recess-projection patterns, respectively.

A recessed portion which corresponds to the recess-projection pattern of one die and another recessed portion which corresponds to the recess-projection pattern of another die may be formed on one surface and another surface of sheet material, respectively. Also, the recessed portion having a total volume including a volume which corresponds to the total volume of projections of the recess-projection pattern of the one die and a volume which corresponds to the total volume of projections of the recess-projection pattern of the another die (hereafter, recessed portion having total volume), may be formed on one surface of sheet material.

When a recessed portion which corresponds to the recess-projection pattern of one die and another recessed portion which corresponds to the recess-projection pattern of another die are formed on one surface and another surface of the sheet material, respectively, recess-projection patterns of the one die and the other die can be placed to face the recessed portion which correspond to the recess-projection patterns of the one die and the other die, respectively.

In addition, when the recessed portion having total volume is formed on one surface of sheet material, in pressing process, any one of the recess-projection patterns of one die and another die can be placed to face the recessed portion having total volume.

It is preferable that a recessed portion having total volume be formed on one surface of sheet material, because the sheet-forming process of forming recessed portion on sheet material can be more easily carried out in a fewer steps than the case in which the recessed portion which corresponds to the recess-projection pattern of one die and the recessed portion which corresponds to the recess-projection pattern of another die are formed on one surface and another surface of sheet material, respectively. In particular, when producing a fuel cell separator as a molded article has a thickness of 2mm or less, it is preferable that recessed portion having total volume be formed on one surface of sheet material, because it becomes difficult to form recessed portion on both sides of the thin sheet material.

No difference in the effect of reducing the thickness deviation of the molded article is observed between the case in which a recessed portion having a total volume is formed on one surface of the sheet material and the case when the recessed portion which corresponds to the recess-projection pattern of one die and the recessed portion which corresponds to the recess-projection pattern of another die are formed on one surface and another surface of sheet material, respectively.

Also, when the recess-projection pattern formed on one die and with the recess-projection pattern formed on another die is overlapped in plan view, it is preferable that the plan view area of the recessed portion having total volume be larger than the area enclosed by the edges of the outermost projections among the projections of one die. In this case, in the pressing process, the recessed portion having total volume is preferably placed to face the recess-projection pattern of the die by placing the edge of the recessed portion, in cross-sectional view, outer than the outermost projections in the die.

Also, when the plan view area of the recess-projection pattern formed on one die and the recess-projection pattern formed on another die is not overlapped, it is preferable that the plan view area of the recessed portion having total volume be larger than the area enclosed by the edges of the outermost projections among the projections of both dies. In this case, in the pressing process, the recessed portion having total volume is preferably placed to face the recess-projection pattern of the die by placing the edge of the recessed portion, in cross-sectional view, outer than the outermost projections in both dies.

The depth of the recessed portion having total volume, for example, can be preferably determined by the following method. Firstly, for example, in the same manner as the embodiments described above, the prescribed plan shape and depth of the first recessed portion having a volume corresponding to a total volume of the projections is determined, based on the plan shape of the recess-projection pattern and the total volume of the projections of the one die. Then, for example, in the same manner as the embodiments described above, the prescribed plan shape and depth of the second recessed portion having a volume corresponding to a total volume of the projections is determined, based on the plan shape of the recess-projection pattern and the total volume of the projections of the another die. After that, the depth of the recessed portion having total volume can be determined by adding the depth of the first recessed portion to the depth of the second recessed portion, wherein the depth of first recessed portion and the depth of the second recessed portion are obtained, respectively, in the case that the first recessed portion is faced to the recess-projection pattern of the one die while the second recessed portion is faced to the recess-projection pattern of the another die.

In other words, when the first recessed portion is faced to the recess-projection pattern of one die while the second recessed portion is faced to the recess-projection pattern of another die, in the section in which the plan view area of the recess-projection pattern of one die is overlapped with the recess-projection pattern of the other die, the depth of the recessed portion having total volume is a sum of depths of the first and second recessed portions; in the section in which the plan view area of the recess-projection pattern of one die is not overlapped with the recess-projection pattern of the other die, the depth of the recessed portion having total volume is any one of depths of the first and second recessed portions.

In addition, the shape of the recess-projection pattern formed in a pair of dies used in the present invention is not particularly limited.

As the shape of the recess-projection pattern, for example, the group of projections including a plurality of projections having stripe shapes equally spaced, may be placed in the shape of a letter "I" in plan view, the shape of a letter "U" in plan view, and the shape of a letter "L" in plan view. In addition, the projections group including a plurality of projections having stripe shapes equally spaced, may be placed at regular intervals, or progressively wider or narrower. In addition, the width of each projection included the projections group may be constant, or gradually wider or narrower. In addition, the height of each projection included the projections group may be constant, or gradually higher or lower.

Also, in the pair of the dies used in the invention, one kind of recess-projection may be formed in one die, or more than two kinds of recess-projection may be formed in one die. When more than two kinds of recess-projection may be formed in one die and the interval between the adjacent projection recess-patterns is near, in particular, the interval between the adjacent projection patterns is less than the width D of the outermost projections among the plurality of projections of the projection pattern, it is preferable to integrate one recessed portion corresponding with one recess-projection pattern to another recessed portion corresponding to the adjacent recess-projection pattern. In this case, the sheet-forming process of forming recessed portion on the sheet material can be carried out more easily in fewer steps than the case that one recessed portion corresponding to one recess-projection pattern and another recessed portion corresponding to the adjacent recess-projection patterns are formed separately.

In addition, when more than two kinds of recess-projection patterns are formed on one die, the plan shape and volume of each recessed portion of sheet material are determined separately, of course, according to each recess-projection pattern.

Therefore, according to the invention, even if molded article having complex shape and having two kinds of recess-projection patterns, a good molded article with small thickness deviation can be obtained.

EXAMPLE

An example embodiment of the present invention is described in detail in the following.

(Example 1)

A fuel cell separator of Example 1 as a molded article was produced by using the sheet press molding method of the present invention, using a sheet material containing a carbonaceous material as filler.

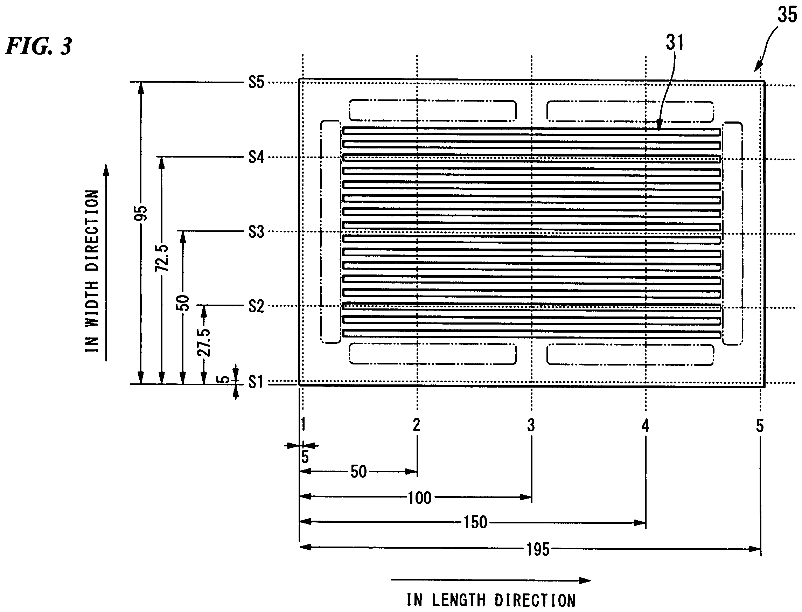

In other words, on the surface of the sheet material described below, a recessed portion was formed, as shown below (sheet-forming process); and then after the recessed portion of the sheet material was faced to the recess-projection pattern of the die shown below, under the following conditions of pressing process, the fuel cell separator 35, shown in Fig. 3, having the passage pattern 31 on one side which was transferred from the recess-projection pattern by applying pressure to the die, was obtained (pressing process). Further, in the pressing process, the recessed portion was placed to face the recess-projection pattern of the die by placing the edge of the recessed portion to the outer than the outermost projections among the recess-projection pattern of the die.

"Die"

A pair of dies in which only the lower die has the following dimensions of recess-projection pattern was used.
Recess-projection pattern: projections (groove of fuel cell separator) having a trapezoid-shape in cross-projection view with a depth (height) of 0.5 mm, lower width (bottom width) of 2.1mm, upper width (top width) of 1.9 mm and average width of 2 mm, are placed in stripes shape having pitch of 4 mm (2 mm interval between the upper width), in the area having a length of 160 mm and a width of 62 mm, setting the length direction the same as the length direction of projections (groove).

"Sheet material"

(Production of carbonaceous material).

First, non-needle coke (MC Coke: MC Carbon Co., Ltd.) was pulverized into a size of 3mm or less by using pulverizer (manufactured by Hosokawa Micron Corporation). Subsequently, the crude product was fine-pulverized by using a jet mill pulverizer (IDS2UR: Nippon Pneumatic Co., Ltd.) and the particle size was adjusted by the classifier. In this classification, by using Turbo Classifier (TC15N: Nisshin Engineering Co., Ltd.), air classification is carried out to remove particles smaller than 5 $\mu$m. Next, 0.15kg of boron carbide ($B_4C$) was added to the 14.85 kg of finely pulverized product, and was mixed for 5 minutes at 800 rpm by using Henschel mixer. Then, the 1kg of resulting mixture was sealed in a graphite crucible having volume of 1.5 liter with a lid, and the graphite crucible was introduced into a graphitizing furnace having a graphite heater. Once the graphitizing furnace was vacuumed, then argon gas is introduced, and the sample was graphitized at a temperature of 2800°C and at a atmosphere of 1.2 atm under a stream of argon gas, and then the sample was cooled under argon gas atmosphere. As a result, 0.49kg of fine powder of artificial graphite was obtained. In addition, the average particle size of the obtained fine powder of artificial graphite was 20 $\mu$m.
In addition, a boron-containing natural graphite was obtained by mixing boron carbide using natural graphite made in China (BTRSG18: manufactured by BTR Energy Materials) with an average grain size of 18 $\mu$m, in the same manner as the above case of using finely pulverized product having adjusted particle size. The average particle size of the obtained boron-containing natural graphite was 25$\mu$m.
In this way, carbonaceous material was obtained by mixing equal amounts of the artificial fine powder graphite and the boron-containing natural graphite.
In addition, the average particle size of the fine powder of artificial graphite and the boron-containing natural graphite was measured by the method described below.
Firstly, 50 mg of samples were weighed and 50ml of distilled water was added. Further, 0.2 ml of 2% aqueous solution of Triton (surfactant; manufactured by Wako Pure Chemical Industries) was added to the resulting mixture, and then ultrasound was applied for 3 minutes to disperse the sample. After that, number average particle size was measured by using laser diffraction method (microtrac HRA analyzer, made by Nikkiso, Ltd.).

(Production of sheet material)

A kneaded mixture containing the components of sheet material was obtained by kneading carbonaceous materials obtained in above manner, the resin composition shown in Table 1 and the reaction initiator shown in Table 1, at 100°C and the rotational speed of 40 rpm for 5 minutes by using Labo Plastomill (manufactured by Toyo Seiki Seisaku-sho). The kneaded mixture was pulverized by using the Wiley Pulverizer (manufactured by Yoshida Seisakusho) and is sieved to obtain fine powder under 2 mm sieve. Sheet material having length of 200mm, width of 100mm and thickness of 1.15 mm was obtained by heating the fine powder to 90°C in an oven, and supplying it to 10-inch roll (manufactured by Daihan) having surface temperature of 30 °C to make a sheet of the fine powder.
The obtained sheet material contained 85% of the carbonaceous material by mass, and had density of 1.5g/cm$^3$. Boron content in carbonaceous material was 2% by mass. As content of boron, the value obtained by induced plasma emission spectroscopy (hereinafter, "ICP" and abbreviated) was used. Specifically, the amount of boron was measured by using an ICP emission analyzer. A sample for the measurement was prepared by the following manner. First, sulfuric acid and nitric acid was added to the boron-containing carbonaceous material sample, and the resulting mixture was decomposed by heating at 230°C, using the microwave (digester method), followed by decomposition using perchloric acid ($HClO_4$), and then diluting it with water. As density of the sheet material, specific gravity measured by water displacement method as specified in Method A of JIS K7112 (Archimedes method) was used.

Table 1

|  |  | Composition (mass%) |
|---|---|---|
| Resin Composition | 1,2-polybutadiene *1 | 7.1 |
|  | 1,2-polybutadiene *2 | 3.55 |
|  | Low density Polyethylene *3 | 3.55 |
| carbonaceous material | Artificial Graphite / Natural Graphite | 85.1 |
| Reaction initiator | 2,5-dimethyl 2.5-di(tert-butylperoxy)hexane *4 | 0.7 |
| *1 NISSO-PB B3000, Manufactured by Nippon Soda<br>*2 JSR RB 810, Manufactured by JSR<br>*3 Novatec LD LJ802, Manufactured by Japan Polyethylene<br>*4 Kayahexa AD, Manufactured by Kayaku Akzo | | |

"Recessed portion"

On the sheet material, a recessed portion with depth of 0.3 mm was formed in the area (160 mm length and 64 mm width) having a length which was the same as that of formed recess-projection pattern, and a width which was larger, with an increment equal to the upper width (top width) of the projection, than the width of the area in which the recess-projection patter was formed, by cutting and removing sheet material by using a milling machine.

In addition, when the density of the sheet material is $\rho_1$, the density of the fuel cell separator is $\rho_2$, the total volume of the projections of the die is X, and the volume of the recessed portion of the sheet material is Y, the following equation was satisfied:

$$Y / X = \rho_2/\rho_1 .$$

The density of fuel cell separator $\rho_2$ in the above formula was 1.8g/cm$^3$. It had been confirmed by examining a sample molded at the conditions described below in advance.

In addition, the total volume of projections X was calculated as follows.

Total volume of projections X =

length of projections ×width of projections ×number of projections × height of projections

$$= 16\text{cm} \times 0.2\text{cm} \times 16 \times 0.05 \text{ cm} = 2.56\text{cm}^3.$$

Also, the plan view area of recessed portion S was calculated as follows. That is, the plan view of recessed portion was set to a sum of the plan view area of the recess-projection pattern and an increased area having a length same as the length of the projection and a width of D/2, wherein, when D is the width of the outermost projection, the interval between the edge of the recessed portion and the outermost projection was set to D/2 = 0.2cm / 2 = 0.1cm. As a result, the plan view area of the recessed portion S became lager than the area enclosed by the edge of the outermost projection.

S = length of projection × {width of projection + width of interval between projection portion + ((D / 2) × 2)}

$$= 16\text{cm} \times (6.2\text{cm} + 0.2 \text{ cm})$$

$$= 102.4\text{cm}^2$$

In addition, depth d1 of the recessed portion was calculated by using the above volume of recessed portion Y, the plan view area of recessed portion S, and the above formula (Y / X = ρ2/ρ1) as follows.

$$d1 = Y / S$$

$$= 1.8 \ (g/cm^3) \ / \ (1.5 g/cm^3) \times 2.56 \ (cm^3) \ / \ 102.4 \ (cm^2)$$

$$= 0.03 \ (cm) = 0.3 \ (mm)$$

"Pressing Conditions"

Load was 250t, temperature is 180°C, and cure time (which is the time from starting to apply pressure to die, to removing the fuel cell separator from the die.) was 2.5 minutes.

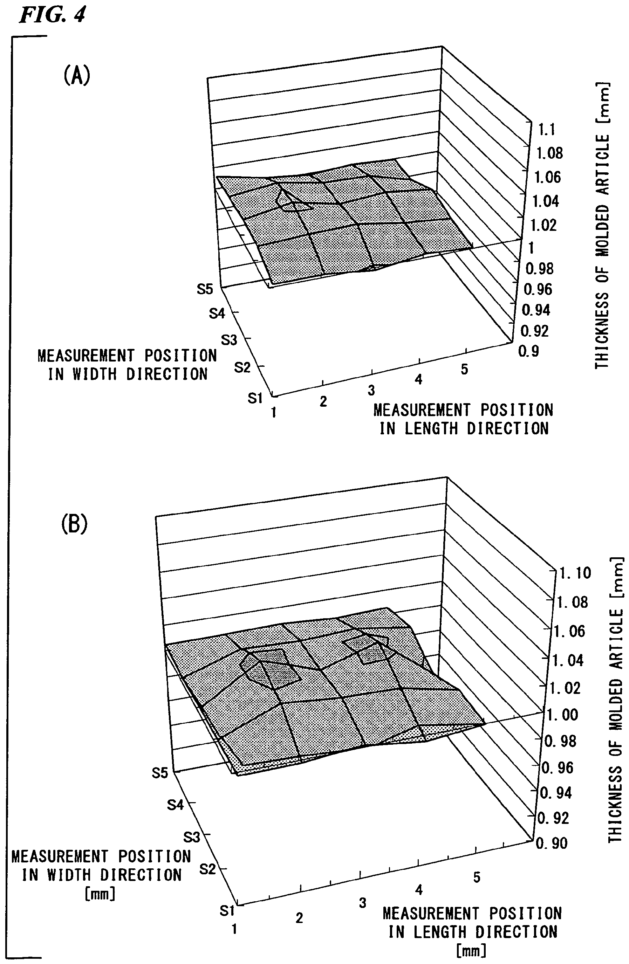

Thickness deviation of the fuel cell separator 35 obtained in Example 1 was evaluated by measuring the thickness at several positions by using micrometers. The positions for measurement of the thickness of the fuel cell separator 35, as shown in Fig. 3, were the nodes generated by crossing a first group of lines with a second group of lines, wherein the first group lines included dividing lines in length direction and inner border lines of a margin (dotted lines represented by symbols 1-5 in Fig. 3), and the second group lines included dividing lines in width direction and inner border lines of a margin (dotted lines represented by symbols sl-s5 in Fig. 3), in which both of the margins had width of 5mm from the edge, and the dividing lines in length direction and in width direction were generated by dividing the inner area of the inner border of the margin to four parts having approximately equal size in length direction and in width direction, respectively, in the dimensions shown in Fig. 3 (unit of the dimensions shown in Fig. 3 was mm). The results were shown in Fig. 4 (A) and Table 2. Fig. 4 (A) is a graph showing the evaluation results of thickness deviation of the fuel cell separator of Example 1.

TABLE 2

|  | Example 1 (mm) | Example 2 (mm) |
|---|---|---|
| Maximum | 1.022 | 1.027 |
| Minimum | 0.998 | 0.994 |
| Average | 1.009 | 1.007 |
| Max-Min | 0.024 | 0.033 |
| Standard Difference | 0.007 | 0.009 |

(Example 2)

A fuel cell separator of Example 2 was formed in the same manner as in Example 1, except that the recessed portion was formed by laminating a first sheet and a second sheet, wherein a portion of the first sheet corresponding to the recessed portion of the sheet material was eliminated through the first sheet, and the second sheet contained the same material as the first sheet.

As the first sheet, the sheet in which thickness was 0.32 mm and density was 1.6g/cm³ was used. As the second sheet, the sheet in which thickness was 0.91mm, density was 1.5g/cm³ was used.

In addition, density of the fuel cell separator of Example 2 was 1.8g/cm³.

The thickness deviation of the fuel cell separator obtained in Example 2 was evaluated in the same manner as in Example 1. The results were shown in Fig. 4 (B) and Table 2. Fig. 4 (B) is a graph showing the evaluation results of thickness deviation of the fuel cell separator of Example 2.

(Comparative Example 1)

A fuel cell separator of Comparative Example 1 was formed in the same manner as in Example 1, except that the recessed portion was not formed on the surface of the sheet material.

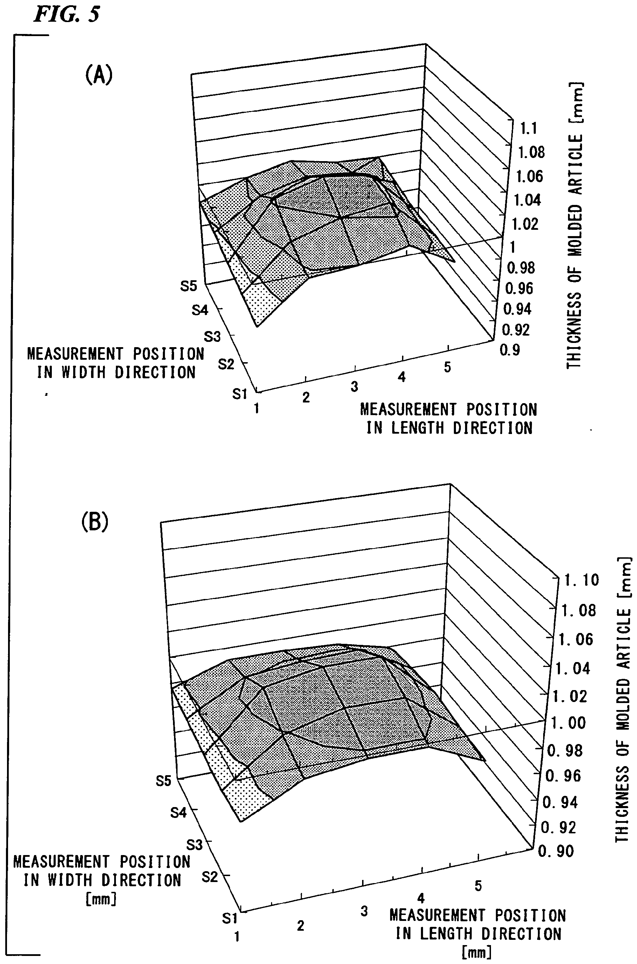

Then, the thickness deviation of the fuel cell separator obtained in Comparative Example 1 was evaluated in the same manner as in Example 1. The results were shown in Fig. 5 (A) and Table 3. Fig. 5 (A) is a graph showing the evaluation results of thickness deviation of the fuel cell separator of Comparative Example 1.

TABLE 3

|  | Comparative Example 1 (mm) | Comparative Example 2 (mm) |
|---|---|---|
| Maximum | 1.035 | 1.020 |
| Minimum | 0.962 | 0.966 |
| Average | 1.000 | 0.992 |
| Max-Min | 0.073 | 0.054 |
| Standard Difference | 0.019 | 0.015 |

(Comparative Example 2)

A fuel cell separator of Comparative Example 2 was formed in the same manner as in Example 1, except that the pressing process was carried out by using a sheet material which had a uniform thickness, and had a thinner thickness than the sheet material used in Example 1 wherein the decreased volume of the sheet material corresponded to the total volume of projections of the recess-projection patterns (X = 2.56 cm$^3$).

Then, the thickness deviation of the fuel cell separator obtained in Comparative Example 2 was evaluated in the same manner as in Example 1. The results were shown in Fig. 5 (B) and Table 3. Fig. 5 (B) is a graph showing the evaluation results of thickness deviation of the fuel cell separator of Comparative Example 2.

As shown in Fig. 5 and Table 3, in Comparative Example 1 in which the recessed portion was not formed on the surface of the sheet material, the difference between the maximum and minimum thickness was 73$\mu$m. In Comparative Example 2 in which the pressing process was carried out by using a sheet material which had a uniform thickness, and had a thinner thickness than the sheet material used in Example 1 wherein the decreased volume of the sheet material corresponded to the total volume of projections of the recess-projection patterns, the difference between the maximum and minimum thickness was 54 $\mu$m.

In contrast, as shown in Fig. 4 and Table 2, it was confirmed in Example 1 in which a recessed portion was formed on the surface of the sheet material, the difference between the maximum and minimum thickness was 24 $\mu$m, and in Example 2, the difference between the maximum and minimum thickness was 33 $\mu$m, both of which were smaller than those in Comparative Example 1 and Comparative Example 2. From this, the sheet press molding method of the present invention was confirmed to have the effect that reduces thickness deviation of molded article.

In addition, as shown in Fig. 4 and Table 2, it was confirmed that in Example 1 in which the volume of the recessed portion of the sheet material Y satisfied the formula (Y / X = $\rho_2/\rho_1$), when the density of the sheet material is $\rho_1$, the density of the fuel cell separator is $\rho_2$, the total volume of the projections of the die is X, the difference between the maximum and minimum thickness was smaller than that in Example 2 in which the formula (Y / X = $\rho_2/\rho_1$) was not satisfied, and the effect reducing thickness deviation of molded article in Example 1 was higher than that in Example 2.

[Explanation of signs]

2a ... recessed portion,
2b ... edge,
2c ... frame part
10 ... die (mold),
11 ... lower die
12 ... upper die,
12a, 13 ... recess-projection pattern,
13a, 13b, 13c, 13d ... projection,
20, 21 ... sheet material,
23, 30 ... molded article,
31 ... flow patterns,
35 ... fuel cell separator.

**Claims**

1.  A sheet press molding method, comprising a step of forming a molded article by applying pressure to a sheet material using a pair of dies (10), at least one of which has a recess-projection pattern (13) comprising a recess and a projection, **characterized in that** the method comprises:

    a sheet-forming process of forming a recessed portion (2a), which has a volume (Y) corresponding to a total volume (X) of the projections (13a to 13d), in the surface of the sheet material (20), which includes a resin composite and 60-95% filler by volume; and
    a pressing process of forming a molded article to which the recess-projection pattern is transferred by placing the recessed portion in the sheet material facing the recess-projection pattern on the dies and then applying pressure to the dies.

2.  The sheet press molding method according to claim 1, wherein
    when the density of the sheet material is $\rho_1$, the density of the molded article is $\rho_2$, the total volume of the projections of the die is X, and the volume of the recessed portion of the sheet material is Y, the following equation is satisfied:

$$Y \, / \, X = \rho_2/\rho_1 \, .$$

3.  The sheet press molding method according to claims 1 or 2, wherein
    a plan view area of the recessed portion is larger than an area enclosed by an edge of an outermost projection among the plurality of the projections, and
    in the pressing process, placing the recessed portion in the sheet material facing the recess-projection pattern by placing the edge of the recessed portion, in cross-sectional view, outer than the outermost projection.

4.  The sheet press molding method according to any one of claims 1 to 3, wherein: when the volume of the recessed portion is Y, and the plan view area of the recessed portion is S, the depth of the recessed portion is Y / S.

5.  The sheet press molding method according to any one of claim 1 to claim 4, wherein:
    the sheet forming process is a process of laminating a first sheet and a second sheet, wherein the first sheet, which contains resin composition and 60% to 95% filler by volume, is formed by eliminating the recessed portion through the first sheet; and the second sheet having a uniform thickness contains the same material as that of the first sheet.

6.  The sheet press molding method according to any one of claim 1 to claim 5, wherein the filler is carbonaceous material.

7.  The sheet press molding method according to claim 1, wherein the molded article is a fuel cell separator, and the filler is a carbonaceous material.

8.  The method according to claim 7, wherein the fuel cell separator has a thickness of 2 mm or less.

9.  The method according to claim 7 or 8, wherein
    a plan view area of the recessed portion is larger than an area enclosed by an edge of an outermost projection among the plurality of the projections, and
    in the pressing process, placing the recessed portion in the sheet material facing the recess-projection pattern of dies by placing the edge of the recessed portion, in cross-sectional view, outer than the outermost projection.

10. The method according to claim 9,
    when a width of the outermost projection is D, the interval between the edge of the recessed portion and the outermost projection is within a range of D/2 to D.


**Patentansprüche**

1.  Bahnenpressformverfahren, welches eine Stufe umfasst, in der ein Formgegenstand gebildet wird, indem auf ein Bahnenmaterial unter Einsatz eines Stempelpaares (10), von denen mindestens ein Stempel ein Muster (13) mit Erhöhungen und Vertiefungen aufweist, Druck ausgeübt wird,

**dadurch gekennzeichnet, dass** das Verfahren umfasst:

ein Bahnenbildungsverfahren, bei dem ein vertiefter Bereich (2a), der ein Volumen (Y) hat, das einem Gesamtvolumen (X) der Erhebungen (13a bis 13d) entspricht, in der Oberfläche des Bahnenmaterials (20), welches einen Harzverbund und 60 bis 95 Vol-% Füllstoff enthält, gebildet wird; und

ein Pressverfahren, bei dem ein Formgegenstand gebildet wird, auf den das Vertiefungserhebungsmuster übertragen wird, indem der vertiefte Bereich in dem Bahnenmaterial, der dem Vertiefungserhebungsmuster zugewandt ist, auf die Stempel gegeben wird und dann auf die Stempel Druck ausgeübt wird.

2. Bahnenpressformverfahren nach Anspruch 1, wobei
die Dichte des Bahnenmaterials $\rho_1$ ist, die Dichte des Formgegenstandes $\rho_2$ ist, das Gesamtvolumen der Erhebungen des Stempels X ist und das Volumen des vertieften Bereichs das Bahnenmaterials Y ist, und die folgende Gleichung erfüllt ist:

$$Y / X = \rho_2/\rho_1$$

3. Bahnenpressformverfahren nach Anspruch 1 oder 2, wobei
eine Daraufsichtfläche des vertieften Bereichs größer ist als eine Fläche, die durch einen Rand der äußersten Erhebung unter der Vielzahl der Erhebungen eingegrenzt wird, und
in dem Pressverfahren der vertiefte Bereich in dem Bahnenmaterial, der dem Vertiefungserhebungsmuster zugewandt ist, dadurch angeordnet wird, dass der Rand des vertieften Bereichs in der Querschnittansicht außerhalb der äußersten Erhebung angeordnet wird.

4. Bahnenpressformverfahren nach einem der Ansprüche 1 bis 3, wobei gilt: wenn das Volumen des vertieften Bereichs Y ist und die Daraufsichtfläche des vertieften Bereichs S ist, ist die Tiefe des vertieften Bereichs Y / S.

5. Bahnenpressformverfahren nach einem der Ansprüche 1 bis 4, wobei gilt:
das Bahnenformverfahren ist ein Verfahren, bei dem eine erste Bahn und eine zweite Bahn laminiert werden, wobei die erste Bahn, die eine Harzzusammensetzung und 60 bis 95 Vol.-% Füllstoff enthält, gebildet wird, indem der vertiefte Bereich durch die erste Bahn beseitigt wird; und die zweite Bahn mit einer gleichförmigen Dicke dasselbe Material wie die erste Bahn enthält.

6. Bahnenpressformverfahren nach einem der Ansprüche 1 bis 5, wobei der Füllstoff ein kohlenstoffhaltiges Material ist.

7. Bahnenpressformverfahren nach Anspruch 1, wobei der Formgegenstand ein Brennstoffzellenseparator ist und der Füllstoff ein kohlenstoffhaltiges Material ist.

8. Verfahren nach Anspruch 7, wobei der Brennstoffzellenseparator eine Dicke von 2 mm oder weniger aufweist.

9. Verfahren nach Anspruch 7 oder 8, wobei
eine Daraufsichtfläche des vertieften Bereichs größer ist als die Fläche, die durch einen Rand einer äußersten Erhebung unter der Vielzahl von Erhebungen eingegrenzt wird, und
in dem Pressverfahren der vertiefte Bereich in dem Bahnenmaterial, das dem Vertiefungserhebungsmuster der Stempel zugewandt ist, angeordnet wird, indem der Rand des vertieften Bereichs in Querschnittansicht außerhalb der äußersten Erhebung angeordnet wird.

10. Verfahren nach Anspruch 9, wobei, wenn eine Breite der äußersten Erhebung D ist, der Zwischenraum zwischen dem Rand des vertieften Bereichs und der äußersten Erhebung im Bereich von D/2 bis D ist.

**Revendications**

1. Procédé de moulage par pressage de feuille, comprenant une étape de formation d'un article moulé en appliquant une pression à un matériau en forme de feuille en utilisant une paire de moules (10), dont au moins un présente un motif concave-convexe (13) comprenant un évidement et une saillie,
**caractérisé en ce que** le procédé comprend les étapes suivantes:

une opération de formation de feuille pour former une partie évidée (2a), qui présente un volume (Y) qui correspond à un volume total (X) des saillies (13a à 13d), dans la surface du matériau en forme de feuille (20), qui comprend une composition de résine et de 60 % à 95 % d'un matériau de charge par volume; et
une opération de pressage pour former un article moulé auquel le motif concave-convexe est transféré en plaçant la partie évidée dans le matériau en forme de feuille en face du motif concave-convexe sur les moules et en appliquant ensuite une pression aux moules.

**2.** Procédé de moulage par pressage de feuille selon la revendication 1, dans lequel, lorsque la densité du matériau en forme de feuille est $\rho_1$, que la densité de l'article moulé est $\rho_2$, que le volume total des saillies du moule est X, et que le volume de la partie évidée du matériau en forme de feuille est Y, l'équation suivante est satisfaite:

$$ Y \ / \ X \ = \ \rho_2 \ / \rho_1. $$

**3.** Procédé de moulage par pressage de feuille selon la revendications 1 ou 2, dans lequel
une région vue en plan de la partie évidée est plus grande qu'une région délimitée par un bord d'une saillie la plus extérieure parmi la pluralité de saillies, et
dans l'opération de pressage, placer la partie évidée dans le matériau en forme de feuille en face du motif concave-convexe en plaçant le bord de la partie évidée, dans une vue en coupe transversale, à l'extérieur de la saillie la plus extérieure.

**4.** Procédé de moulage par pressage de feuille selon l'une quelconque des revendications 1 à 3, dans lequel, lorsque le volume de la partie évidée est Y, et que la région vue en plan de la partie évidée est S, la profondeur de la partie évidée est Y / S.

**5.** Procédé de moulage par pressage de feuille selon l'une quelconque de la revendication 1 à la revendication 4, dans lequel l'opération de formation de feuille est une opération de stratification d'une première feuille et d'une seconde feuille, dans lequel la première feuille, qui contient la composition de résine et de 60 % à 95 % de matériau de charge par volume, est formée en éliminant la partie évidée à travers la première feuille; et la seconde feuille qui présente une épaisseur uniforme contient le même matériau que celui de la première feuille.

**6.** Procédé de moulage par pressage de feuille selon l'une quelconque de la revendication 1 à la revendication 5, dans lequel le matériau de charge est un matériau carboné.

**7.** Procédé de moulage par pressage de feuille selon la revendication 1, dans lequel l'article moulé est un séparateur pour pile à combustible, et le matériau de charge est un matériau carboné.

**8.** Procédé selon la revendication 7, dans lequel le séparateur pour pile à combustible présente une épaisseur de 2 mm, ou moins

**9.** Procédé selon la revendication 7 ou 8, dans lequel
une région vue en plan de la partie évidée est plus grande qu'une région délimitée par un bord d'une saillie la plus extérieure parmi la pluralité de saillies, et
dans l'opération de pressage, placer la partie évidée dans le matériau en forme de feuille en face du motif concave-convexe des moules en plaçant le bord de la partie évidée, dans une vue en coupe transversale, à l'extérieur de la saillie la plus extérieure.

**10.** Procédé selon la revendication 9, dans lequel, lorsqu'une largeur de la saillie la plus extérieure est D, l'intervalle entre le bord de la partie évidée et la saillie la plus extérieure se situe à l'intérieur d'une gamme de D/2 à D.

*FIG. 1*

(A)

12 (10)

13

13a 13b 13c 13d

10

11 (10)

(B)

12

21

11

APPLYING PRESSURE

(C)

12

11

HEATING

(D)

23 12

11

*FIG. 2*

(A)

12 (10)

20

2c

d1

a

2a

2b

D

d2

11
(10)

13a
(13)

13b
(13)

13c
(13)

13d
(13)

(B)

Y

⧄ + ⧄ + ⧄ + ⧄ = X

13a    13b    13c    13d

(C)

30

12

11

22

*FIG. 3*

*FIG. 4*

(A)

(B)

*FIG. 5*

(A)

THICKNESS OF MOLDED ARTICLE [mm]

1.1
1.08
1.06
1.04
1.02
1
0.98
0.96
0.94
0.92
0.9

S5
S4
S3
S2
S1

MEASUREMENT POSITION
IN WIDTH DIRECTION

1    2    3    4    5

MEASUREMENT POSITION
IN LENGTH DIRECTION

(B)

THICKNESS OF MOLDED ARTICLE [mm]

1. 10
1. 08
1. 06
1. 04
1. 02
1. 00
0. 98
0. 96
0. 94
0. 92
0. 90

S5
S4
S3
S2
S1

MEASUREMENT POSITION
IN WIDTH DIRECTION
[mm]

1    2    3    4    5

MEASUREMENT POSITION
IN LENGTH DIRECTION
[mm]

*FIG. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009082619 A
- JP HEI8222241 B
- JP 60161144 A
- JP 2001068128 A
- JP 2000021422 A
- JP 2000082475 A
- JP 2003176327 A
- US 2004028981 A
- JP 2004022207 A

**Non-patent literature cited in the description**

- **BANDO ; SAITO.** Fundamentals of Carbon Nanotubes. Corona, 1998, 23-57